# EUROPEAN PATENT SPECIFICATION

(11) **EP 2 714 376 B1**
(45) Date of publication and mention of the grant of the patent: **01.08.2018**
(21) Application number: 12723437.5
(22) Date of filing: 17.05.2012
(51) Int. Cl.: B29C 70/08, B29C 70/54, B29C 59/02, B32B 3/30, B32B 5/18, B32B 5/26, B32B 5/24, B32B 3/26, B29C 44/56, B29C 70/44, B29C 70/48, B32B 38/06, B32B 38/08, B29C 59/04

(54) **FOAM CORE FOR A COMPOSITE LAMINATED ARTICLE, AND MANUFACTURE THEREOF**
SCHAUMKERN FÜR EINEN VERBUNDLAMINATARTIKEL UND SEINE HERSTELLUNG
ÂME DE MOUSSE POUR OBJET STRATIFIÉ COMPOSITE, ET SON PROCÉDÉ DE FABRICATION

(30) Priority: 27.05.2011 GB 201108981
(43) Date of publication of application: 09.04.2014
(73) Proprietor: Gurit (UK) Ltd., Newport Isle of Wight PO30 5WU (GB)
(72) Inventor: LE MORVAN,, Yannick Yves Henri, Cowes Isle of Wight PO31 7DS (GB); PELLETIER, Mario Cyr, Ste-Catherine de Hatley, Québec J0B1W0 (CA)
(74) Representative: Jenkins, Peter David
(86) International application number: PCT/EP2012/059223
(87) International publication number: WO 2012/163690

(56) References cited:
- EP-A1- 1 162 058
- WO-A1-02/058915
- WO-A1-2010/039377
- DD-A1- 212 470
- US-A- 3 309 450
- US-A1- 2003 127 779

## Description

The present invention relates to a foam core for a composite laminated article and to a method of making a foam core for a composite laminated article. In particular, the present invention relates to such foam cores for composite laminated articles suitable for use in manufacturing large structures such as, for example, wind turbine blades and boat hulls, decks and bulkheads.

Some fibre reinforced composite components comprise an inner rigid foam core sandwiched between outer layers of fibre reinforced composite material. Foam cores are used extensively in the manufacture of fibre reinforced plastic parts to increase the rigidity of the finished article by separating two fibre-reinforced layers, acting as structural skins, with a low-density core material, acting as a structural core. The fibre-reinforced layers are bonded to the low-density core material by a layer of resin material. This construction is commonly called a sandwich panel in the composite industry.

The primary functions of a structural core are to increase panel rigidity, by reducing the overall deflection under load and onset of global panel buckling, and to prevent skin wrinkling and localised buckling.

There is a general need to reduce both construction cost and component weight of composite laminated articles. When a fibre reinforced layer is to be bonded to a core layer it is necessary to provide sufficient resin in the fibre reinforced layer to enable complete bonding to the core layer. There is a need in the art for foam cores that can be securely and reliably bonded to fibre reinforced layers over the interface therebetween that permits a minimum amount of resin to be required for such bonding, in order to minimise the weight and material cost for achieving a given structural performance providing particular mechanical properties.

It is often desired to maximise the mechanical properties of the foam for a given density to enable the lightest weight core to be selected to transfer the structural loads between the fibre reinforced layers. The foam must also be compatible with the materials and manufacturing process used to make structural composite skins.

One widely used method to manufacture such cored composite structures is to assemble the core between opposite layers of dry fibres, for example glass or carbon fibres, and then to infuse a liquid resin under vacuum into the assembly. It is important that the resin is fully infused into the assembly so that there are no residual air pockets or voids in the resultant composite material structure.

In order to enhance the ability of the infused liquid resin to flow and permeate throughout the fibre/core assembly during the vacuum resin infusion process, the core is typically provided with structural features to assist flow in the X, Y and Z directions. The X and Y directions are mutually orthogonal directions in each of the opposed major surfaces of the core, and the Z direction is through the thickness of the core. These structural features typically include through holes in the Z direction, and/or the provision of surface slits and/or grooves, having various configurations, in the X and/or Y direction. A number of different configurations of slits, grooves and holes are known, and each may have positive or negative effects on the ease or speed of processing and the amount of resin absorbed or retained in the foam. Traditionally grooves and slits have been made in the opposed major surfaces of a foam core using a saw knife or router in a slow labour intensive operation, and Z-wise holes are produced separately to the grooves or slits and are drilled.

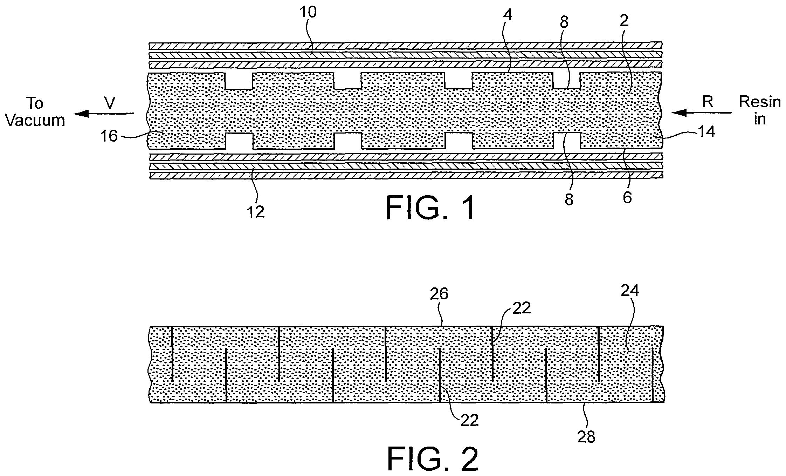

In Figure 1, a known foam core 2 has major opposite surfaces 4, 6 provided with cut or routed grooves 8, formed by a particular routing step which cuts the foam to form the grooves 8. Figure 1 shows groves 8 extending in only one direction, into the plane of the drawing, but additional grooves (not shown) may be provided which extend cross-wise thereto. During manufacture of the composite material, the core 2 is sandwiched between opposite dry fibrous layers 10, 12, and the assembly is disposed within a hermetically sealed chamber, for example within a flexible bag (not shown). A first edge 14 of the assembly is connected to a source of liquid resin R and the second edge 16 of the assembly is connected to a source of vacuum V. The vacuum initially removes air from the chamber and then causes resin to be infused by suction from the first edge 14 to the second edge 16. The grooves 8 enhance resin flow across the surfaces 4, 6 of the core 2, causing a greater uniformity of resin infusion into the opposite dry fibrous layers 10, 12. After infusion, the resin fills the grooves 8.

Figure 2 shows an alternate known core construction in which cut slits 22 are provided in an alternating manner through a major proportion of the thickness of the sheet foam core 24, the slits extending inwardly from the respective major opposite surface 26, 28. The slits 22 on each surface 26, 28 are formed as a square grid.

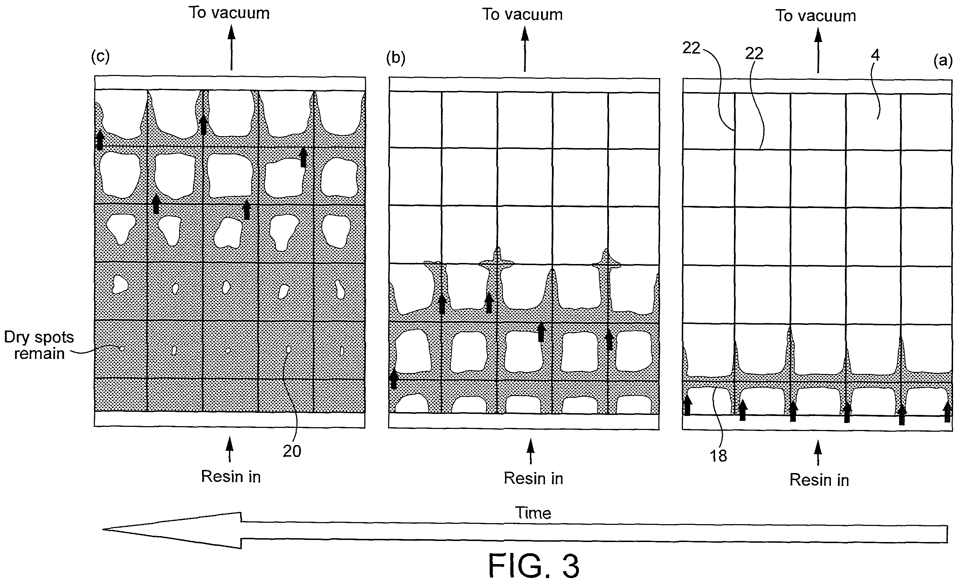

However, one drawback of such known groove/slit pattern types is that they tend to cause dry fibres in the areas between the grooves/slits. These dry fibres are caused by the resin flowing much more quickly through the grooves/slits than through the laminate. This creates 'islands' of dry fibres surrounded by resin which diminish in size with time but never completely disappear. As an illustration of this technical problem, as shown in Figures 3(a) to (c), which are plan view of successive phases during the infusion process using a core as shown in Figure 2, when the slits 22 (or alternatively grooves 8) form a square grid pattern on the surfaces 4, 6, the fibrous layers 10, 12 not being shown for clarity, the flow of the resin 18 preferentially along the slits 22 can cause dry spots 20, which are free of resin, to remain after the resin infusion process. These dry spots cause resin voids which are sources of mechanical weakness in the resultant composite material laminate.

The provision of wider or deeper grooves/slits and/or a greater groove or slit surface area over the major core surfaces, and also an increase in the number and/or diameter of through thickness holes tends to increase the uniformity of resin distribution throughout the laminate. However, these features also tend to increase the amount of resin incorporated in the core. As a rule, it is desired to minimise the amount of resin incorporated in the core because this increases the weight of the final core within the laminate, without enhancing at least some of the structural properties of the cored laminate since some mechanical properties do not increase with an increase in density. Furthermore, the provision of grooves/slits can reduce the mechanical properties of the foam prior to resin infusion, which can also reduce the mechanical properties of the final structural laminate incorporating the foam core.

Accordingly, although the structural modification of a plain sheet core may assist the flow of resin through the laminate assembly, this may have a significant negative effect on the properties of the plain sheet core.

It is also known to use a plain sheet core without such structural features but to modify the infusion process to enhance the distribution of liquid resin throughout the laminate. In certain vacuum resin infusion applications, the X and Y direction flow is facilitated by the use of a high permeability flow medium or mesh as detailed in the SCRIMP process which is known to those skilled in the art. The SCRIMP (Seemann Composites Resin Infusion Molding Process) process provides a system of feeder channels on top of a resin transfer medium in order quickly and predictably to supply liquid resin to dry vacuum-bagged laminate. The resin from the medium flows downwardly into the fibre pack and fills the interstitial spaces. The result is a high-strength, high-fibre content laminate. This system can be used on monolithic laminates incorporating a plain sheet core, without surface grooves, surface slits or through holes. The SCRIMP process can result in the manufacture of cored laminates with the lowest resin uptake. However, the drawback of that production method is that a large amount of waste material is created both in resin and consumables required and it takes longer to layup the components.

Typically, through holes are also used for air removal to assist transfer of resin to an opposite surface of the core even if additional resin transfer media are used.

US-B-6419776 discloses the manufacture of composite honeycomb core panels with a foam edge border, which uses pre-scored foam board with a pattern of indentations that can vent volatiles generated within the panels during manufacture.

JP-A-4189542 discloses forming ventilation grooves on a sheet of heat insulating material, which comprises forming slits on one side of the material, and pressing alternate slits with rolls to give ventilation grooves.

EP-A-0239057 discloses an external insulating sheet for buildings which has rigid polystyrene foam moulded into a flat sheet which has a surface pattern of grooves giving a good bond for ultimate rendering. DD-A-212470, GB-A-2453512 and WO-A-2009/003477 all disclose composite laminated article having a foam core with a foam surface including cut channels.

The present invention aims to provide a foam core with sufficient surface topography to assist the resin flow without requiring the use of a mesh as used in, for example, the SCRIMP process, and/or without providing a structural modification to the core which may lower the specific mechanical performance of the core and/or a resultant composite material sandwich structure.

The present invention also aims to provide a foam core which is structured to permit rapid and even flow of liquid resin throughout the assembly of the foam core and the structural fibres on opposite sides thereof, whilst absorbing a minimal amount of resin during the resin infusion process.

The present invention also aims to provide composite laminated articles comprising a foam core having high mechanical properties, and high thermal properties, which can be readily produced at low cost and using conventional composite manufacturing processes.

According to a first aspect of the present invention there is provided a foam core for a composite laminated article, the foam core having opposite major surfaces, each surface having a network of moulded grooves therein which forms a diamond grid pattern on each of the opposite major surfaces, wherein the network of grooves comprises a first set of mutually parallel first grooves and a second set of mutually parallel second grooves, the first and second grooves being mutually inclined at an acute angle and intersecting to form an array of a plurality of diamond shapes therebetween, and a third set of mutually parallel third grooves extending in a longitudinal direction, each third groove intersecting with a plurality of adjacent intersections of the first and second grooves and, at each intersection, bisecting the acute angle between the first and second grooves, and the foam core further comprising an array of through-holes extending through the thickness of the foam core between the opposite major surfaces. At least some, optionally all, of the moulded grooves are impressed grooves formed by inward pressing of the respective surface of the foam core, for example by an embossing process.

According to a second aspect of the present invention there is provided a method of making a foam core for a composite laminated article according to the invention, the method including the step of pressing a die into each opposite major surface of a layer of foam, the die having a raised die surface corresponding to a part of the network of grooves therein.

According to a third aspect of the present invention there is provided a method of making a composite laminated article, the method including the steps of:
(a) providing a lay-up assembly comprising the foam core of the invention sandwiched between opposite first and second layers including fibre reinforcement;
(b) subjecting the lay-up assembly to a vacuum in an enclosure; and
(c) vacuum infusing a liquid infusion resin into the first and second layers by providing a source of the resin at a first side of the enclosure and the vacuum at an opposite second side of the enclosure, the resin flowing along the network of grooves in each opposite major surface from the first side to the second side.

According to a fourth aspect of the present invention there is provided a method of making a composite laminated article, the method including the steps of:
(a) providing a lay-up assembly comprising a foam core sandwiched between opposite first and second layers including fibre reinforcement, the foam core having opposite major surfaces, each surface having a network of moulded grooves therein;
(b) subjecting the lay-up assembly to a vacuum in an enclosure; and
(c) vacuum infusing a liquid infusion resin into the first and second layers by providing a source of the resin at a first side of the enclosure and the vacuum at an opposite second side of the enclosure, the resin flowing along the network of grooves in each opposite major surface from the first side to the second side, wherein each groove of the network is oriented, or has a component thereof oriented, in a resin flow direction extending from the first side to the second side.

The preferred embodiments of the present invention seek to meet the aims identified above, and to provide a core structure which can be manufactured easily and a low cost. In addition, the core can be readily incorporated into a composite material manufacturing process which is rapid, reliable and cost effective to set up.

Instead of profiling the core surface with a saw or knife, the core manufacturing method of the preferred embodiments of the present invention employs the use of embossing elements, preferably embossed rollers, which mould, and in particular impress, the surface of the core, thereby imparting a surface pattern consisting of a diamond grid with directional straight grooves which provide a preferential flow path for the liquid resin.

The preferred embodiments of the present invention can be applied to a variety of types of foam core which can be used in any industry where composite materials are used, especially when using a vacuum resin infusion process.

The preferred embodiments of the present invention provide a method for imparting resin transfer grooves into the surface of the core and the pattern fulfils the requirements for resin flow with minimal resin uptake, and also without any deleterious effect on the mechanical properties of the foam prior to treatment.

Embodiments of the invention will now be described, by way of example only, with reference to the accompanying drawings, in which:
Figure 1 illustrates a cross-sectional view of an assembly of a first known foam core assembled between opposite fibrous layers for forming a known sandwich panel structure;
Figure 2 illustrates a cross-sectional view of a second known foam core for use in manufacturing a known sandwich panel structure;
Figure 3 illustrates a plan view of an assembly incorporating the core of Figure 2 during a vacuum resin infusion step during manufacture of a known sandwich panel structure;
Figure 4 illustrates a plan view of a foam core produced in accordance with an embodiment of the present invention;
Figure 5 illustrates a cross-sectional view of the foam core of Figure 4;
Figures 6(a) and (b) respectively illustrate a plan view of the foam core of Figure 4 when used in a respective one of two different orientations during a vacuum resin infusion step in accordance with an Example of the present invention; and
Figure 7 schematically illustrates a side view of an apparatus to produce an embossed foam core in accordance with an embodiment of the present invention.

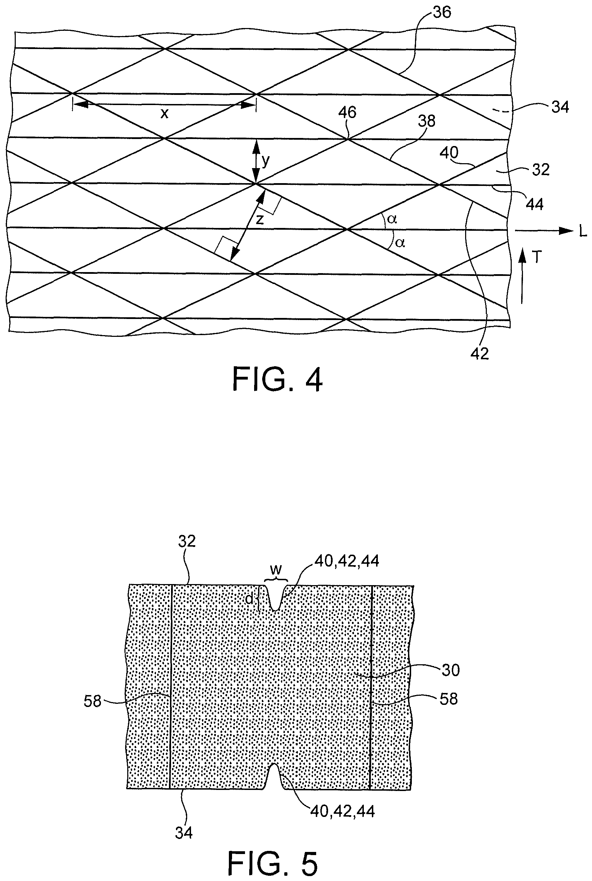

Referring to Figures 4 and 5, there is provided a foam core 30 for a composite laminated article in accordance with a first embodiment of the present invention. The foam core is typically a closed cell foam of a thermoplastic material. A suitable foam material is that sold by the Applicant under the registered trade mark Corecell. Alternative foam materials which may be used in accordance with the present invention comprise low density structural foams having a density of from 50-600g/L currently used in the composite industry, such as cross-linked polyvinyl chloride (PVC) foam, styrene acrylonitrile (SAN) foam, polyethylene terephthalate (PET) foam and polymethacrylimide (PMI) foam. Alternatively, the foam core may be composed of preexpanded polystyrene (PS), known in the art as EPS, containing polyphenylene oxide (PPO), also known as polyphenylene ether (PPE). Other foam compositions may be used in the present invention.

The core 30 has major opposite surfaces 32, 34, provided with moulded, preferably impressed, grooves 36. The grooves 36 form a diamond grid pattern 38, which extends over the entire respective surface 32, 34 of the core 30. The pattern 38 comprises three groove types, each groove type comprising a respective array of mutually parallel grooves 36. The three groove types are each inclined with respect to the other groove types.

First and second groove types 40, 42 are each inclined, in a respective angular direction, at an acute angle α, typically 30°, to a longitudinal direction L, and a third groove type 44 extends along the longitudinal direction L, with each intersection 46 of the grooves 36 being an intersection of the three groove types 40, 42, 44. The acute angle 2α between the first and second groove types 40, 42 ranges from 45 to 80 degrees, and is typically about 60 degrees. The intersections 46 are spaced in the longitudinal direction by a distance x which is greater than the spacing of the intersections 46 in the transverse direction T, orthogonal to the longitudinal direction, which is a distance 2y. Each intersection 46 is spaced in the transverse direction from the adjacent groove 36 of third groove type 44 by a distance y, which is also the spacing of the parallel grooves 36 of the third grove type 44. Each groove 36 of the first and second groove types 40, 42 is spaced from the adjacent parallel groove 36 of the same groove type 40, 42 by a distance z. Typically, the distance x is from 50 to 150 mm, more typically from 60 to 100 mm, most typically about 80 mm. Typically, the distance y is from 10 to 30 mm, more typically from 15 to 25 mm, most typically about 20 mm. Typically, the distance z is from 20 to 50 mm, more typically from 25 to 40 mm, most typically about 35 mm.

The grooves typically have a depth d of from 0.5 to 2.5mm, more typically from 1 to 2 mm, most typically about 1.5mm, and a width w of from 0.25 to 2mm, more typically from 0.5 to 1.5 mm, most typically about 1 mm.

The grooves 36 are formed by pressing a respective rigid die for example composed of metal, into the foam surface, The die forms an embossed impression of a groove 36 in the respective surface 32, 34. The surface 32, 34 is not cut and no waste foam is formed.

The embossing pressure is controlled to impart into the foam surface a pattern of grooves which corresponds to the die pattern, with minimal crushing of the surrounding core. Foam material has ductility to deform the foam surface inwardly under the die pressure without cutting through the cellular foam structure. The groove-forming deformation is retained after removal of the die pressure.

The die may be a flat bed die or, more preferably a rotary die, having a raised die surface defining the diamond patterned network 48 of grooves 36. The surfaces 32, 34 may be formed with grooves 36 either sequentially or simultaneously.

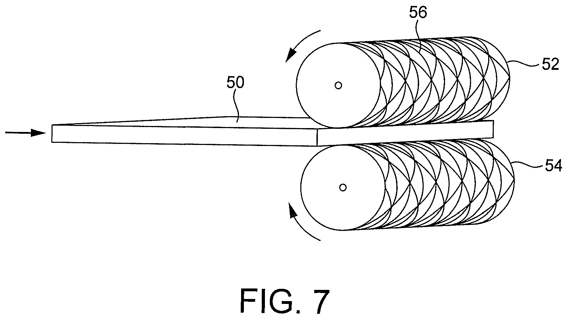

As shown for example in Figure 7, the foam sheet 50 may be fed through opposed rotary dies 52, 54. Each die 52, 54 has a raised profile of interconnected die elements 56, for example of aluminium, corresponding to the diamond patterned network 48 of grooves 36. Alternatively, a single rotary die may be used to emboss a single surface, with two sequential passes under the rotary die in order successively to emboss the opposite surfaces. The frictional contact between the rotary die or dies and the foam sheet can provide a translational force to move the sheet under the die or dies, so that the rotary die mechanism acts as a transport mechanism for the foam sheet passing therethrough.

The grooves 36 extend, or have a component which extends, in either of the X and Y directions in the respective surface 32, 34 of the core 36. The core 30 is also provided with an array of through-holes 58 in the Z direction. The through-holes 58 are preferably arranged in a rectangular array, optionally which has a periodicity corresponding to the periodicity of the diamond patterned network 48 of grooves 36. However, the through-holes 58 may be aligned, or unaligned, with the grooves 36. The through-holes 58 typically have an internal diameter of 0.5 to 2 mm, more typically about 1 mm. The holes 58 may be spaced by a distance of from 10 to 50 mm, more typically about 20mm.

The through-holes 58 are formed by a punching operation, using needles to punch through the thickness of the core 36. The punching operation may produce a minor amount of foam swarf. The punch may comprise a flat bed punch, to ensure that the through-holes 58 are orthogonal to the surfaces 32, 34. The punching operation may be carried out before or after the formation of the grooves 36.

The groove and hole forming operations and associated apparatus may be incorporated into a core kitting plant for post-treatment of pre-formed core sheets. In such a case the orientation of the core during groove formation, and hence the orientation of the preferential resin flow, can be selected based on the macroscopic shape and orientation of the foam part to be employed in the ultimate sandwich structure. Alternatively, such operations and apparatus may be located on the foam manufacturing line at the point of manufacture of the cellular foam.

The foam core of the embodiments of the present invention may have particular application for use as a core for a variety of widely different industrial applications, and in particular when minimal flexibility or curvature about an axis parallel to the major surfaces is required in the foam core.

The shape and dimensions of the embossed grooves minimise the amount of resin retained within the grooves, which in turn minimises the total weight of the resultant composite material sandwich structure. Furthermore, since the foam material has ductility to deform the foam surface inwardly under the die pressure without cutting trough the cellular foam structure, no cut cellular surfaces of the foam cells are exposed to the infused liquid resin material, and this also reduces resin uptake by the foam as compared to the known cores where grooves or slits have been formed by a cutting or routing step which actually cuts through individual foam cells.

In addition to the weight saving, the diamond pattern of grooves provides highly effective resin distribution to the fibrous laminates on both sides of the foam core. As compared to the known machined, namely cut or routed channels having a square pattern as discussed above, the diamond pattern avoids this by having generally smaller impressed channels and a smaller spacing between adjacent channels in the array. Also, the provision of a groove network comprising three differently oriented groove types provides a more intricate network that the known square array, and consequently a more homogeneous distribution of resin. This allows the resin to wet out the dry reinforcement fibres in a more even manner.

A further advantage of having closely spaced shallow channels is that 'print through' is reduced. Print through is present when the pattern of the channels in the surface of the core can be seen in the fibre-reinforced resin matrix material present in the final sandwich product on opposite sides of the core. This phenomenon occurs where the resin in the channels shrinks slightly and leaves slight indentations in the final sandwich surface, the pattern of the indentations substantially matching the pattern of the grooves. The wider and/or deeper the channel, the larger the dimensional change with resin shrinkage. This phenomenon can result in much re-work of components especially where higher shrinkage polyester resins are used.

During manufacture of the composite material, in manner similar to that shown in Figure 1, the core 30 is sandwiched between opposite dry fibrous layers and the assembly is disposed within a hermetically sealed chamber, for example within a vacuum bag. Then liquid resin, for example a thermosetting resin such as an epoxy resin, polyester resin or vinyl ester resin, is infused into the assembly under a vacuum. A vacuum source and a supply of liquid resin are provided on opposite sides of the assembly. Air is initially evacuated from the chamber under the vacuum, and then the resin supply is connected. The liquid resin passes into the assembly and propagates across the assembly towards the vacuum source. The grooves in the opposite surfaces of the core assist the achievement of a homogeneous distribution of the liquid resin throughout the dry fibrous layers so as to eliminate any dry fibres in the resultant infused assembly. Thereafter, the resin is cured to produce the final fibre-reinforced resin matrix composite material sandwich structure with a central foam core.

The present invention will now be described in greater detail with reference to the following non-limiting Examples

### Example 1

In this Example of the present invention, the effectiveness of the diamond patterned network of grooves to distribute resin during an infusion process was tested.

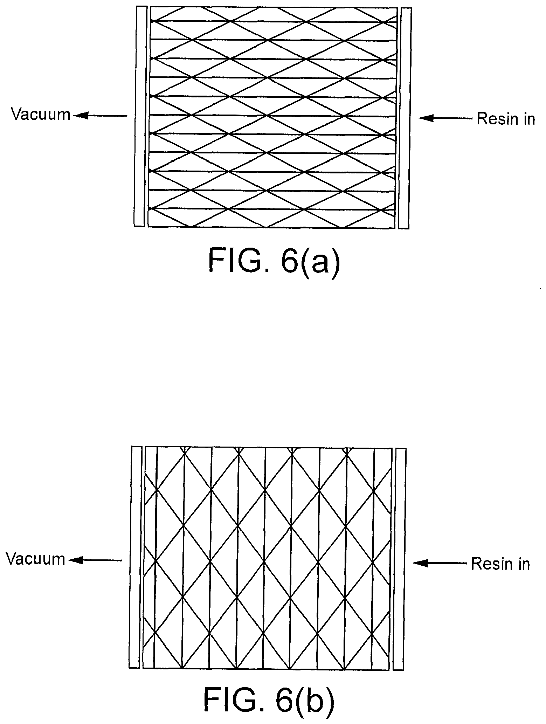

A 20 mm thick foam core having the diamond patterned network of grooves on opposite surfaces in accordance with an embodiment of the present invention, and punched Z-wise holes, was provided. The foam was composed of Corecell M80 marine-grade foam having a density of 80kg/m³. The foam had the diamond patterned network and the groove dimensions were 1.5mm wide and 1.5mm deep. Referring to Figure 4, the dimension x, the pitch length of each diamond formed by the grooves, was 80 mm; the dimension y, the spacing between the parallel longitudinal grooves, was 20 mm; and the dimension z, the spacing between the diamond shape-forming parallel grooves, was 36 mm. The longitudinally oriented grooves were aligned parallel to the resin flow direction, as shown in Figure 6(a), namely extending between the resin inlet and the vacuum source. Therefore the mutually inclined diamond shaped grooves were acutely aligned to the resin flow direction.

The core was disposed in a vacuum bag between dry laminate layers of fibrous reinforcement comprising one outer ply of 300g/m² glass fibre and one inner ply, disposed against the core surface, of 1200 g/m² quadraxial glass fibre on either side of the core layer. The foam core was completely infused by an epoxy resin, in particular a resin available in commerce from Gurit (UK) limited under the trade name Prime 20LV/Slow having a mixed viscosity of 214 - 228 centiPoise at 25°C. Then the epoxy resin was cured.

It was found that the resin uptake of the foam core was 1300 grams per square metre of panel area (the panel area being defined by the external width/length dimensions of the panel and excluding the side surfaces of the grooves). The resin flow speed across the foam core was measured at 7 minutes for 60 mm of advancement of the resin flow across the foam core.

The core of Example 1 was also subjected to mechanical testing to determine what effect the impressed groove structure, combined with the Z-wise holes, had on the mechanical properties of the foam core. The foam core had a shear modulus of 27.4 MPa, a maximum shear strength of 1.04 N/mm² and a shear strain at failure of 48%. These values may be compared to the following values for the foam material specified on the product data sheet for the foam material, namely a shear modulus of 29 MPa, a maximum shear strength of 1.09 N/mm² and a shear strain at failure of 58%. It may be seen that these mechanical properties for the foam core having the grooves and Z-wise holes are not significantly lower than those of the base foam material. In addition, the foam core having the groove and Z-wise holes had a shear strain at the maximum load on a stress/strain curve of 28.8%

### Example 2

Example 1 was repeated but changing the orientation of the foam core relative to the resin flow direction. The longitudinally oriented grooves were aligned orthogonal to the resin flow direction, as shown in Figure 6(b). Again, the foam core was completely infused by the same resin, and then the resin was cured. The resin flow speed across the foam core was measured at 14 minutes for 60 mm of advancement of the resin flow across the foam core.

A comparison of Examples 1 and 2 shows that orienting the longitudinally oriented grooves parallel to the resin flow direction as in Example 1, namely extending between the resin inlet and the vacuum source, increased resin flow during the infusion process. The changed orientation had no effect on resin uptake of the foam core, which was determined by the groove dimensions which were the same for each Example.

### Comparative Example 1

Example 1 was again repeated but using as the foam core 20 mm thick Corecell M80 sheet which had the double cut structure illustrated in Figures 2 and 3 to define on each surface longitudinal and transverse cuts to form 600 x 600 mm square grid of cuts on each surface. The cuts extended inwardly to a thickness of greater than 50% of the core thickness. There were no grooves or Z-wise holes. The foam core on its upper major surface was covered with a conventional infusion mesh. Similar to Figure 3, one set of cuts forming the grid was oriented with respect to the resin flow direction. The foam core was completely infused by the same resin as Example 1, and then the resin was cured.

It was found that the resin uptake of the foam core was 1900 grams per square metre of the panel. This was higher than for Examples 1 and 2, showing that the impressed groove structure associated with the Z-wise holes of Examples 1 and 2 advantageously retains less resin in the core than a conventional double-cut core.

Furthermore, the infusion mesh used in Comparative Example 1 consumed an additional 800 - 900 grams per square metre of the panel. Therefore the core of the present invention, as shown by Examples 1 and 2, can be employed without an infusion mesh and still achieve uniform resin distribution to the fibrous laminates on opposite sides of the core without residual undesirable dry fibre areas, which can result in a total resin saving of 1400 - 1500 grams per square metre of the panel.

Also, the resin flow speed across the foam core in Comparative Example 1 was much slower than for Example 1, and was measured at 15 minutes for 60 mm of advancement of the resin flow across the foam core.

The preferred embodiments of the present invention can provide a number of technical benefits and advantages over prior core structures and methods for manufacturing such cores or using them in composite material manufacturing processes, namely can exhibit a lower resin uptake compared with some known 'infusion-core' treatments; a core with controllable resin flow via the preferential flow pattern; can eliminate dry spots associated with other square grid patterns on core surfaces; can reduce 'print through'; can remove the need for flow media consumables; can save the composite material manufacturer time and money with reduced layup and resin use; can provide lighter structural composite material components; the production method for the core is quicker and/or more cost effective than known process for manufacturing a foam core with liquid resin distribution properties; less waste foam is produced during manufacture of the core; no hazardous dust is created during manufacture of the core.

## Claims

1. A foam core for a composite laminated article, the foam core having opposite major surfaces, each surface having a network of moulded grooves therein which forms a diamond grid pattern on each of the opposite major surfaces, wherein the network of grooves comprises a first set of mutually parallel first grooves and a second set of mutually parallel second grooves, the first and second grooves being mutually inclined at an acute angle and intersecting to form an array of a plurality of diamond shapes therebetween, and a third set of mutually parallel third grooves extending in a longitudinal direction, each third groove intersecting with a plurality of adjacent intersections of the first and second grooves and, at each intersection, bisecting the acute angle between the first and second grooves, and the foam core further comprising an array of through-holes extending through the thickness of the foam core between the opposite major surfaces, wherein at least some, optionally all, of the moulded grooves are impressed grooves formed by inward pressing of the respective surface of the foam core.

2. A foam core as claimed in Claim 1, wherein the spacing between the first grooves is the same as the spacing between the second grooves, optionally wherein the spacing is from 20 to 50 mm, further optionally from 25 to 40 mm, yet further optionally about 35 mm.

3. A foam core as claimed in any foregoing Claim, wherein the acute angle ranges from 45 to 80 degrees, typically about 60 degrees.

4. A foam core as claimed in any foregoing Claim, wherein each groove intersection comprises an intersection of first, second and third grooves.

5. A foam core as claimed in any foregoing Claim, wherein (i) the groove intersections are spaced in the longitudinal direction of the third grooves by a distance which is greater than the spacing of the groove intersections in the transverse direction which is orthogonal to the longitudinal direction; and/or (ii) the groove intersections are spaced in the longitudinal direction of the third grooves by a distance of from 50 to 150 mm, optionally from 60 to 100 mm, further optionally about 80 mm; and/or (iii) the spacing between the third grooves is from 10 to 30 mm, optionally from 15 to 25 mm, further optionally about 20 mm; and/or (iv) the grooves have a depth of from 0.5 to 2.5 mm, optionally from 1 to 2 mm, further optionally about 1.5 mm; and/or (v) the grooves have a width of from 0.25 to 2 mm, optionally from 0.5 to 1.5 mm, further optionally about 1 mm; and/or (vi) the sidewalls of each groove consist of uncut pressure-deformed cellular walls; and/or (vii) the network of grooves on one major surface is aligned with the network of grooves on the opposite major surface.

6. A foam core as claimed in any foregoing Claim, wherein (i) the through-holes are arranged in a rectangular array which has a periodicity corresponding to a periodicity of the network of grooves; and/or (ii) the through-holes are unaligned with the grooves; and/or (iii) the through-holes typically have an internal diameter of from 0.5 to 2 mm, optionally about 1 mm; and/or (iv) the through-holes are spaced by a distance of from 10 to 50 mm, optionally about 20mm.

7. A foam core as claimed in any foregoing Claim, wherein the through-holes are punched through the thickness of the foam core.

8. A foam core as claimed in any foregoing Claim, wherein the foam core is composed of a closed cell foam of a thermoplastic material.

9. A method of making a foam core for a composite laminated article according to any foregoing Claim, the method including the step of pressing a die into each opposite major surface of a layer of foam, the die having a raised die surface corresponding to a part of the network of grooves therein.

10. A method as claimed in Claim 9, wherein the die includes at least one rotary die, optionally wherein the die includes a pair of opposed rotary dies with a gap therebetween for passage of the layer of foam therethrough, further optionally wherein rotation of the pair of opposed rotary dies transports the layer of foam through the gap in an embossing operation.

11. A method as claimed in Claim 9 or Claim 10, the method further comprising the step of punching an array of needle-like punches through the layer of foam to form an array of the through-holes.

12. A method of making a composite laminated article, the method including the steps of:
(a) providing a lay-up assembly comprising the foam core of any one of claims 1 to 8 sandwiched between opposite first and second layers including fibre reinforcement;
(b) subjecting the lay-up assembly to a vacuum in an enclosure; and
(c) vacuum infusing a liquid infusion resin into the first and second layers by providing a source of the resin at a first side of the enclosure and the vacuum at an opposite second side of the enclosure, the resin flowing along the network of impressed grooves in each opposite major surface from the first side to the second side.

13. A method as claimed in Claim 12, wherein each groove of the network is oriented, or has a component thereof oriented, in a resin flow direction extending from the first side to the second side.

14. A method as claimed in Claim 12 or Claim 13, wherein the third set of mutually parallel third grooves extend in a longitudinal resin flow direction extending from the first side to the second side.

## Patentansprüche

1. Ein Schaumkern für einen Verbundlaminatartikel, wobei der Schaumkern gegenüberliegende Hauptoberflächen aufweist und jede Oberfläche ein Netz aus darin geformten Rillen aufweist, das auf jeder der gegenüberliegenden Hauptoberflächen ein rautenförmiges Gittermuster bildet, wobei das Netz aus Rillen einen ersten Satz von zueinander parallelen ersten Rillen und einen zweiten Satz von zueinander parallelen zweiten Rillen -wobei die ersten und die zweiten Rillen miteinander einen spitzen Winkel bilden und sich so überschneiden, dass sie eine Anordnung aus einer Mehrzahl von dazwischen liegenden Rautenformen bilden, - sowie einen dritten Satz von zueinander parallelen, in einer Längsrichtung verlaufenden dritten Rillen umfasst, wobei sich jede dritte Rille mit einer Mehrzahl von aneinandergrenzenden Schnittstellen der ersten und die zweiten Rillen überschneidet und bei jeder Schnittstelle den spitzen Winkel zwischen den ersten und zweiten Rillen halbiert, und wobei der Schaumkern zusätzlich eine Anordnung von Durchgangslöchern aufweist, die durch die Dicke des Schaumkerns zwischen den gegenüberliegenden Hauptoberflächen verlaufen, wobei es sich bei mindestens einer und optional allen der geformten Rillen um geprägte Rillen handelt, die durch eine Einprägung in die jeweiligen Oberflächen des Schaumkerns geformt werden.

2. Ein Schaumkern wie in Anspruch 1 beansprucht, wobei die Abstände zwischen den ersten Rillen dieselben sind wie die Abstände zwischen den zweiten Rillen und wobei optional die Abstände zwischen 20 und 50 mm bzw. weiter optional zwischen 25 und 40 mm bzw. noch weiter optional ungefähr 35 mm betragen.

3. Ein Schaumkern wie in einem der vorangegangenen Ansprüche beansprucht, wobei der spitze Winkel 45 bis 80 Grad und typischerweise ungefähr 60 Grad misst.

4. Ein Schaumkern wie in einem der vorangegangenen Ansprüche beansprucht, wobei jede Schnittstelle der Rillen eine Schnittstelle von ersten, zweiten und dritten Rillen umfasst.

5. Ein Schaumkern wie in einem der vorangegangenen Ansprüche beansprucht, wobei (i) die Schnittstellen der Rillen in der Längsrichtung der dritten Rillen einen Abstand zueinander aufweisen, der größer ist als der Abstand der Schnittstellen der Rillen in der orthogonal zur Längsrichtung verlaufenden Querrichtung; und/oder (ii) die Schnittstellen der Rillen in der Längsrichtung der dritten Rillen einen Abstand von 50 bis 150 mm, optional von 60 bis 100 mm und weiter optional von ungefähr 80 mm zueinander aufweisen; und/oder (iii) der Abstand der dritten Rillen 10 bis 30 mm, optional 15 bis 25 mm und weiter optional ungefähr 20 mm zueinander beträgt; und/oder (iv) die Rillen eine Tiefe von 0,5 bis 2 mm, optional von 1 bis 2 mm und weiter optional von ungefähr 1,5 mm aufweisen; und/oder (v) die Rillen eine Breite von 0,25 bis 2 mm, optional von 0,5 bis 1,5 mm und weiter optional von ungefähr 1 mm aufweisen; und/oder (vi) die Seitenwände jeder Rille aus ungeschnittenen, druckverformten Zellwänden bestehen; und/oder (vii) das Netz der Rillen auf einer Hauptoberfläche an dem Netz der Rillen auf der gegenüberliegenden Hauptoberfläche ausgerichtet ist.

6. Ein Schaumkern wie in einem der vorangegangenen Ansprüche beansprucht, wobei (i) die Durchgangslöcher in einer rechteckigen Anordnung ausgerichtet sind, die eine Periodizität aufweist, welche einer Periodizität des Netzes der Rillen entspricht; und/oder (ii) die Durchgangslöcher nicht an den Rillen ausgerichtet sind; und/oder (iii) die Durchgangslöcher typischerweise einen Innendurchmesser von 0,5 bis 2 mm und optional von ungefähr 1 mm aufweisen; und/oder (iv) die Durchgangslöcher einen Abstand von 10 bis 50 mm und optional von ungefähr 20 mm zueinander aufweisen.

7. Ein Schaumkern wie in einem der vorangegangenen Ansprüche beansprucht, wobei die Durchgangslöcher durch die Dicke des Schaumkerns gestanzt werden.

8. Ein Schaumkern wie in einem der vorangegangenen Ansprüche beansprucht, wobei der Schaumkern aus einem geschlossenzelligen Schaum eines thermoplastischen Materials besteht.

9. Ein Verfahren zur Herstellung eines Schaumkerns für einen Verbundlaminatartikel gemäß einem der vorangegangenen Ansprüche, wobei das Verfahren den Schritt des Pressens einer Stanze in jede gegenüberliegende Hauptoberfläche einer Schicht des Schaumstoffs umfasst und die Stanze eine erhabene Stanzoberfläche aufweist, die einem Teil des Netzes an Rillen darin entspricht.

10. Ein Verfahren wie in Anspruch 9 beansprucht, wobei die Stanze mindestens eine Rotationsstanze umfasst und wobei die Stanze optional ein Paar von gegenüberliegenden Rotationsstanzen mit einer Lücke dazwischen umfasst, die den Durchlauf einer Schicht von Schaumstoff durch sie ermöglichen, wobei weiterhin optional die Rotation des Paares der gegenüberliegenden Rotationsstanzen die Schicht von Schaumstoff in einem Prägungsvorgang durch die Lücke befördert.

11. Ein Verfahren wie in Anspruch 9 oder Anspruch 10 beansprucht, wobei das Verfahren zusätzlich den Schritt des Stanzens einer Anordnung von nadelartigen Stanzen durch die Schicht von Schaumstoff umfasst, um eine Anordnung der Durchgangslöcher zu bilden.

12. Ein Verfahren zur Herstellung eines Verbundlaminatartikels, wobei das Verfahren die folgenden Schritte umfasst:
(a) Bereitstellung einer Auflegeanlage, bestehend aus dem Schaumkern von einem der Ansprüche 1 bis 8, der zwischen die gegenüberliegende erste und zweite Schicht einschließlich einer Faserverstärkung geklemmt wird;
(b) Einführung der Auflegeanlage in ein Vakuum in einem Gehäuse; und
(c) Vakuuminfundieren eines flüssigen Infusionsharzes in die erste und zweite Schicht durch Bereitstellung einer Quelle des Harzes an einer ersten Seite des Gehäuses und des Vakuums an einer gegenüberliegenden zweiten Seite des Gehäuses, wobei das Harz entlang dem Netz der geprägten Rillen in jeder gegenüberliegenden Hauptoberfläche von der ersten Seite zur zweiten Seite fließt.

13. Ein Verfahren wie in Anspruch 12 beansprucht, wobei jede Rille des Netzes an einer von der ersten Seite zur zweiten Seite verlaufenden Fließrichtung des Harzes ausgerichtet ist oder eine Komponente aufweist, die so ausgerichtet ist.

14. Ein Verfahren wie in Anspruch 12 oder Anspruch 13 beansprucht, wobei der dritte Satz an zueinander parallelen dritten Rillen in einer von der ersten Seite zur zweiten Seite verlaufenden Längsrichtung des Harzflusses verläuft.

## Revendications

1. Une âme de mousse destinée à un objet stratifié composite, l'âme de mousse ayant des surfaces principales opposées, chaque surface y ayant un réseau de gorges moulées qui forme une motif à grille de losanges sur chacune des surfaces principales opposées, dans laquelle le réseau de gorges comprend un premier ensemble de premières gorges mutuellement parallèles et un deuxième ensemble de deuxièmes gorges mutuellement parallèles, les premières et deuxièmes gorges étant mutuellement inclinées selon un angle aigu et se croisant pour former un groupe d'une pluralité de losanges entre elles, et un troisième ensemble de troisièmes gorges mutuellement parallèles s'étendant dans une direction longitudinale, chaque troisième gorge se croisant avec une pluralité d'intersections adjacentes des premières et deuxièmes gorges et, à chaque intersection, coupant en deux l'angle aigu entre les premières et deuxièmes gorges, et l'âme de mousse comprenant en outre un groupe de trous traversants s'étendant à travers l'épaisseur de l'âme de mousse entre les surfaces principales opposées, dans laquelle au moins certaines des, en option toutes les, gorges moulées sont des gorges gaufrées formées en pressant vers l'intérieur de la surface respective de l'âme de mousse.

2. Une âme de mousse selon la revendication 1, dans laquelle l'espacement entre les premières gorges est le même que l'espacement entre les deuxièmes gorges, en option dans laquelle l'espacement est compris entre 20 et 50 mm, en outre en option entre 25 et 40 mm, plus en outre en option d'environ 35 mm.

3. Une âme de mousse selon l'une quelconque des revendications précédentes, dans laquelle l'angle aigu est compris entre 45 et 80 degrés, le plus souvent d'environ 60 degrés.

4. Une âme de mousse selon l'une quelconque des revendications précédentes, dans laquelle chaque intersection de gorge comprend une intersection des premières, deuxièmes et troisièmes gorges.

5. Une âme de mousse selon l'une quelconque des revendications précédentes, dans laquelle (i) les intersections de gorges sont espacées dans la direction longitudinale des troisièmes gorges par une distance qui est supérieure à l'espacement des intersections de gorges dans la direction transversale qui est perpendiculaire à la direction longitudinale ; et/ou (ii) les intersections de gorges sont espacées dans la direction longitudinale des troisièmes gorges par une distance comprise entre 50 et 150 mm, en option entre 60 et 100 mm, en outre en option d'environ 80 mm ; et/ou (iii) l'espacement entre les troisièmes gorges est compris entre 10 et 30 mm, en option entre 15 et 25 mm, en outre en option d'environ 20 mm ; et/ou (iv) les gorges ont une profondeur comprise entre 0,5 et 2,5 mm, en option entre 1 et 2 mm, en outre en option d'environ 1,5 mm ; et/ou (v) les gorges ont une largeur comprise entre 0,25 et 2 mm, en option entre 0,5 et 1,5 mm, en outre en option d'environ 1 mm ; et/ou (vi) les parois latérales de chaque gorge consistent en des parois cellulaires déformées par la pression, non coupées ; et/ou (vii) le réseau de gorges qui est sur une surface principale est aligné avec le réseau de gorges qui est sur la surface principale opposée.

6. Une âme de mousse selon l'une quelconque des revendications précédentes, dans laquelle (i) les trous traversants sont agencés dans un groupe rectangulaire qui a une périodicité correspondant à une périodicité du réseau de gorges ; et/ou (ii) les trous traversants ne sont pas alignés avec les gorges ; et/ou (iii) les trous traversants ont le plus souvent un diamètre intérieur compris entre 0,5 et 2 mm, en option d'environ 1 mm ; et/ou (iv) les trous traversants sont espacés par une distance comprise entre 10 et 50 mm, en option d'environ 20 mm.

7. Une âme de mousse selon l'une quelconque des revendications précédentes, dans laquelle les trous traversants sont poinçonnés à travers l'épaisseur de l'âme de mousse.

8. Une âme de mousse selon l'une quelconque des revendications précédentes, dans laquelle l'âme de mousse est composée d'une mousse à cellules fermées d'une matière thermoplastique.

9. Un procédé de fabrication d'une âme de mousse pour un objet stratifié composite selon l'une quelconque des revendications précédentes, le procédé incluant l'étape consistant à presser une matrice dans chaque surface principale opposée d'une couche de mousse, la matrice ayant une surface de matrice surélevée correspondant à une partie du réseau de gorges s'y trouvant.

10. Un procédé selon la revendication 9, dans lequel la matrice inclut une ou plusieurs matrices rotatives, en option, dans lequel la matrice inclut une paire de matrices rotatives opposées avec un espace entre celles-ci pour y faire passer la couche de mousse, en outre en option dans lequel la rotation de la paire de matrices rotatives opposées transporte la couche de mousse à travers l'espace dans une opération de gaufrage.

11. Un procédé selon la revendication 9 ou la revendication 10, le procédé comprenant en outre l'étape consistant à poinçonner un groupe de piqûres en forme d'aiguilles à travers la couche de mousse pour former un groupe des trous traversants.

12. Un procédé de fabrication d'un article stratifié composite, le procédé incluant les étapes consistant à :
(a) fournir un ensemble de superposition comprenant l'âme de mousse selon l'une quelconque des revendications 1 à 8 en sandwich entre des premières et deuxièmes couches opposées incluant un renfort fibreux ;
(b) soumettre l'ensemble de superposition à un vide dans une enceinte ; et
(c) infuser sous vide une infusion de résine liquide dans les premières et deuxièmes couches en fournissant une source de la résine à un premier côté de l'enceinte et le vide à un deuxième côté opposé de l'enceinte, la résine s'écoulant le long du réseau de gorges gaufrées dans chaque surface principale opposée depuis le premier côté vers le deuxième côté.

13. Un procédé selon la revendication 12, dans lequel chaque gorge du réseau est orientée, ou a un composant de celle-ci orienté, dans une direction d'écoulement de la résine s'étendant du premier côté au deuxième côté.

14. Un procédé selon la revendication 12 ou la revendication 13, dans lequel le troisième ensemble de troisièmes gorges mutuellement parallèles s'étend dans une direction d'écoulement de la résine longitudinale s'étendant du premier côté au deuxième côté.
